# FASCICULE DE BREVET EUROPEEN

(11) **EP 0 711 685 B1**
(45) Date de publication et mention de la délivrance du brevet: **07.01.1998**
(21) Numéro de dépôt: 95402361.0
(22) Date de dépôt: 23.10.1995
(51) Int. Cl.: B60R 16/02

(54) **Dispositif de raccordement électrique de premiers composants intégrés dans un volant de direction notamment de véhicule automobile et de seconds composants intégrés dans le reste de celui-ci**
Elektrische Verbindung zwischen den Bauteilen im Lenkrad mit den Bauteilen in der Karrosserie eines Kraftfahrzeuges
Electrical connection device between first elements integrated in a steering wheel, especially of a vehicle, and second elements integrated in the remainer

(30) Priorité: 09.11.1994 FR 9413478
(43) Date de publication de la demande: 15.05.1996
(73) Titulaire: AUTOMOBILES PEUGEOT, 75116 Paris (FR); AUTOMOBILES CITROEN, 92200 Neuilly-sur-Seine (FR)
(72) Inventeur: Fromion, Alexandre, F-92160 Antony (FR)
(74) Mandataire: Habasque, Etienne Joel Jean-François

(56) Documents cités:
- DE-A- 3 242 380
- DE-A- 3 329 049
- DE-A- 3 520 516
- US-A- 4 926 158

## Description

La présente invention concerne un dispositif de raccordement électrique de premiers composants intégrés dans un volant de direction notamment de véhicule automobile, et de seconds composants intégrés dans le reste de la structure de celui-ci.

On connaît déjà dans l'état de la technique différents dispositifs de ce type. On connaît notamment du document FR-A-2 572 563 au nom de ACIERS ET OUTILLAGE PEUGEOT, un dispositif de transmission, par contacts tournants à frottement, d'informations issues d'un volant de direction, à un organe solidaire d'un véhicule.

Dans ce dispositif, des contacts tournants à frottement de raccordement des composants, sont adaptés pour transmettre un signal d'alimentation des premiers composants à partir des seconds composants et des signaux d'informations à partir des premiers composants vers les seconds composants.

De manière plus spécifique, ce dispositif comporte trois contacts tournants à frottement, dont deux sont utilisés pour assurer l'alimentation des premiers composants à partir des bornes positive et négative de l'alimentation du véhicule, tandis qu'un troisième contact tournant à frottement est utilisé pour transmettre les signaux d'informations des premiers composants vers les seconds composants.

Dans ce document également, ces signaux d'informations se présentent sous la forme de signaux de fréquence.

Ces dispositifs ont été développés pour permettre l'intégration dans le volant de direction du véhicule et par exemple dans le coussin central de celui-ci, de moyens de commande d'organes fonctionnels du véhicule.

Cependant, les capacités de transmission de tels dispositifs sont relativement limitées actuellement, car elles sont liées au nombre de contacts tournants à frottement utilisés. Le nombre de ces contacts est actuellement relativement réduit en raison de leur coût, ce qui réduit en conséquence les capacités de transmission d'informations et donc le nombre d'organes de commande peuvent être intégrés dans le volant.

Or, il serait souhaitable de pouvoir intégrer de plus en plus de moyens de commande dans les volants de direction pour permettre le pilotage d'organes fonctionnels de plus en plus nombreux à bord des véhicules automobiles.

Le but de l'invention est donc de résoudre ces problèmes.

A cet effet, l'invention a pour objet un dispositif de raccordement électrique de premiers composants intégrés dans un volant de direction notamment de véhicule automobile, et de seconds composants intégrés dans le reste de la structure de celui-ci, du type comportant des moyens de raccordement des composants, adaptés pour transmettre un signal d'alimentation des premiers composants à partir des seconds composants et des signaux d'informations à partir des premiers composants vers les seconds composants, caractérisé en ce que les premiers composants comportent des moyens de modulation de l'amplitude du courant d'alimentation circulant entre les seconds et les premiers composants, pour transmettre lesdits signaux d'informations en direction des seconds composants et en ce que les seconds composants comportent des moyens de reconnaissance dans le signal d'alimentation, desdits signaux d'information.

L'invention sera mieux comprise à l'aide de la description qui va suivre donnée uniquement à titre d'exemple et faite en se référant aux dessins annexés sur lesquels :
- la figure 1 représente un schéma synoptique illustrant la structure générale d'un dispositif de raccordement électrique selon l'invention,
- la figure 2 représente un schéma électrique illustrant un mode de réalisation possible de premiers composants intégrés dans un volant de direction, et entrant dans la constitution d'un dispositif selon l'invention,
- et les figures 3 et 4 illustrent deux variantes de réalisation de seconds composants intégrés dans le reste de la structure d'un véhicule, et entrant dans la constitution d'un dispositif selon l'invention.

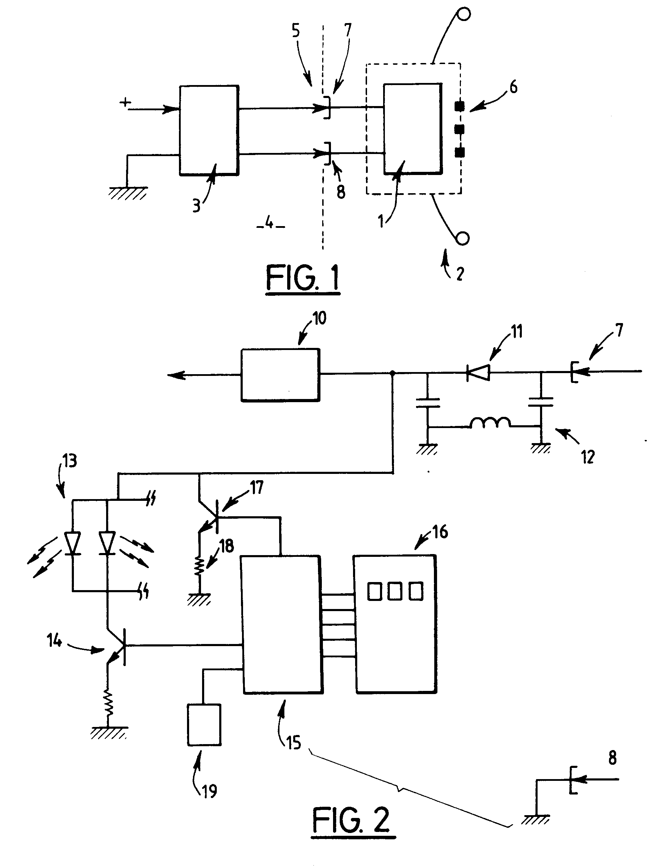

On a représenté sur la figure 1, un dispositif de raccordement électrique de premiers composants désignés par la référence générale 1, intégrés dans un volant de direction notamment de véhicule automobile désigné par la référence générale 2, et de seconds composants désignés par la référence générale 3, intégrés dans le reste de la structure de celui-ci, désigné par la référence générale 4.

Les dispositifs de ce type comportent généralement des moyens de raccordement comportant des organes de raccordement tels que par exemple des contacts tournants à frottement désignés par la référence générale 5, de raccordement des composants, ces contacts tournants à frottement étant adaptés pour transmettre un signal d'alimentation des premiers composants 1 à partir des seconds composants 3 et des signaux d'informations à partir des premiers composants 1 vers les seconds composants 3.

A cet effet, les seconds composants 3 sont raccordés par exemple à la borne positive de la batterie d'alimentation du véhicule et à la masse, tandis que les premiers composants comprennent des moyens de commande d'organes fonctionnels du véhicule, tels que par exemple des touches désignées de manière générale par la référence 6, intégrés dans le coussin central du volant par exemple et permettant à un utilisateur de piloter ces organes fonctionnels.

Alors que dans le document précité, deux contacts tournants à frottement ont été utilisés pour assurer l'alimentation des premiers composants à partir des seconds composants et un contact tournant à frottement a été utilisé pour transmettre les informations de ces premiers composants vers les seconds composants, dans le dispositif de raccordement selon l'invention, deux contacts tournants à frottement 7 et 8 sont utilisés entre ces composants pour assurer à la fois l'alimentation des premiers composants et la transmission des signaux d'informations de ces premiers composants vers les seconds composants.

Ces signaux d'informations sont transmis par exemple sous forme de messages binaires superposés sur le signal d'alimentation.

A cet effet, les premiers composants comportent des moyens de modulation de l'amplitude du courant d'alimentation circulant entre les seconds et les premiers composants pour transmettre lesdits signaux d'information en direction des seconds composants, et ces seconds composants comportent des moyens de reconnaissance dans le signal d'alimentation, desdits signaux d'informations.

On a représenté sur la figure 2 un exemple de réalisation des premiers composants intégrés dans le volant de direction.

Ces premiers composants comportent un circuit de génération d'une tension d'alimentation des moyens entrant dans la constitution de ces composants, désigné par la référence générale 10, et raccordé par l'intermédiaire d'une diode 11 de protection contre une inversion de polarité et d'un réseau inductance/capacité de protection contre les rayonnements électromagnétiques et désigné par la référence générale 12, au contact tournant à frottement 7. Le contact tournant à frottement 8 fournit quant à lui une référence de masse.

Ce contact 7 sert également à alimenter à travers la diode de protection 11 par exemple des diodes électroluminescentes désignées par la référence générale 13, connectées en série avec un transistor 14 piloté par un micro-contrôleur 15, pour assurer l'éclairage de moyens de commande intégrés dans le volant de direction.

Ces moyens de commande sont par exemple désignés par la référence générale 16 et se présentent sous la forme d'une matrice d'organes de commande formés de touches ou de tout autre désignateur ou molette approprié, raccordés à des bornes d'entrée du micro-contrôleur 15.

Une borne de sortie de ce micro-contrôleur 15 est reliée à la base d'un transistor NPN 17 dont l'émetteur est relié à la masse à travers une résistance de charge 18 et dont le collecteur est relié au contact tournant à frottement 7 à travers la diode de protection 11.

L'alimentation de ce micro-contrôleur 15 peut être assurée par l'intermédiaire d'un régulateur de tension de faible consommation et de faible tension de déchet, associé à différents condensateurs de découplage et faisant partie du circuit de génération de tension 10 décrit précédemment.

Ce micro-contrôleur peut comporter n'importe quel ensemble à microprocesseur approprié.

Ce micro-contrôleur 15 est également associé à des moyens d'horloge 19 comprenant par exemple un résonateur.

Ce micro-contrôleur 15 permet de gérer la scrutation des organes de commande 16 tels que les touches ou désignateurs, en assurant une gestion de la fonction d'anti-rebond mécanique de ces touches, pour détecter leur actionnement.

A partir des informations d'actionnement correspondantes, le micro-contrôleur 15 engendre des signaux d'informations sous la forme de trains d'impulsions binaires, qui sont appliqués à la base du transistor 17 monté en source de courant, de façon à engendrer un train binaire de signaux d'informations en superposition sur le signal d'alimentation circulant dans le contact tournant à frottement 7.

Un train d'informations binaires peut être émis par exemple toutes les 20 millisecondes, ce train pouvant être compatible avec le format asynchrone à 9600 bits/seconde standard et comportant un bit de START, 8 bits de données et un bit de STOP.

Il est bien entendu possible d'utiliser différents codes de transmission de bits comme le code Manchester bien connu dans l'état de la technique ou même compatibles avec des trames de communication des protocoles VAN ou autres bien connus dans l'état de la technique.

Le protocole VAN peut être mis en oeuvre soit grâce à un composant externe du type contrôleur de protocole ou même être mis en oeuvre uniquement par logiciel au sein du micro-contrôleur 15.

Il est également possible, dans le cas où or utilise ce type de protocole comme protocole de transmission, de ne pas utiliser de micro-contrôleur spécifique mais d'utiliser un composant périphérique de type VAN esclave pour réaliser la fonction.

Ce micro-contrôleur 15 peut également être muni d'une fonction de veille/réveil d'un organe fonctionnel tel que par exemple de l'autoradio du véhicule.

Ceci implique une liaison bidirectionnelle et dans ce cas les premiers composants reçoivent une information indiquant que cet organe fonctionnel est toujours en fonctionnement.

Lorsque cet organe est mis hors fonction, cette information est coupée et le micro-contrôleur détecte cette coupure et passe lui-même dans un état de veille, c'est-à-dire de basse consommation pour préserver la batterie d'alimentation du véhicule, en arrêtant la transmission d'informations vers le reste des circuits et en surveillant l'appui sur une touche ou la rotation d'une molette pour repasser dans un état de réveil.

On conçoit alors que, dans le dispositif selon l'invention, les signaux d'informations sont engendrés par un micro-contrôleur des premiers composants sous la forme de trains d'impulsions qui sont représentatifs de l'actionnement ou non des moyens de commande et qui sont transmis par l'intermédiaire de l'un des contacts tournants à frottement aux seconds composants intégrés dans le reste du véhicule, en superposant sur le signal d'alimentation de ces premiers composants, les signaux d'informations.

Ces signaux sont superposés sur le signal d'alimentation grâce au transistor 17 qui, sous la commande du micro-contrôleur 15, entraîne une consommation supplémentaire de courant pour transmettre un bit d'informations, c'est-à-dire une modulation du courant d'alimentation.

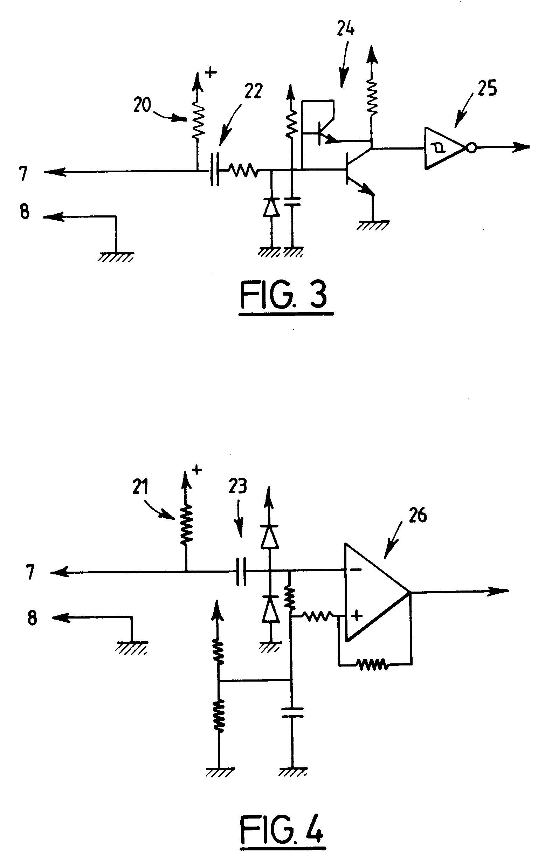

Sur les figures 3 et 4, on a représenté deux variantes de réalisation des seconds composants intégrés dans le reste de la structure du véhicule.

Ces seconds composants comprennent des moyens d'alimentation des premiers composants et sont par exemple reliés à la borne positive de l'alimentation du véhicule et à la masse.

Dans les exemples illustrés sur ces figures, ces moyens d'alimentation comprennent par exemple simplement une résistance 20,21 interposée entre la borne positive de l'alimentation du véhicule et le contact tournant à frottement 7 tandis que le contact tournant à frottement 8 est relié directement à la masse.

De plus, ces seconds composants comprennent des moyens d'analyse du signal d'alimentation des premiers composants pour en extraire les signaux d'informations et ces moyens d'analyse sont par exemple adaptés pour extraire les signaux d'information du signal d'analyse en utilisant un couplage capacitif à l'aide d'un condensateur désigné par la référence 22 sur la figure 3 et par la référence 23 sur la figure 4.

Ce condensateur permet de supprimer la composante continue du signal.

Ensuite, le signal d'informations extrait est mis en forme pour une utilisation par le reste des circuits du véhicule.

C'est ainsi par exemple que sur la figure 3, on utilise un amplificateur à transistor 24 avec une compensation de température du niveau de repos qui correspond au niveau logique 0.

Un inverseur 25 est connecté en sortie de l'étage à transistor pour garantir les temps de montée/descente du signal d'informations à appliquer au reste du dispositif de réception mais également suivant le cas, pour fournir un signal ayant la bonne polarité.

Il est également possible d'utiliser un comparateur de tension couplé capacitivement comme on peut le voir sur la figure 4, ce comparateur étant désigné par la référence générale 26.

Les signaux d'informations ainsi recueillis sont ensuite adressés vers le reste des circuits du véhicule pour assurer la commande des organes fonctionnels correspondants par exemple par l'intermédiaire de tous moyens appropriés.

On conçoit alors que le dispositif de raccordement selon l'invention peut être utilisé pour assurer la transmission d'informations entre des moyens de commande portés par un volant de direction et le reste des circuits d'un véhicule automobile, pour assurer la gestion par exemple d'un interrupteur d'avertisseur, d'un clavier en matrice de touches, de molettes ou de tout autre désignateur, mais également pour assurer le pilotage de l'allumage ou de l'extinction de diodes d'électroluminescentes d'éclairage de ces touches , tout en permettant une différenciation de l'actionnement de ces touches.

C'est ainsi par exemple que le micro-contrôleur intégré dans le volant peut assurer une prise en compte de l'appui de touches au relâché, c'est-à-dire un appui court ou un appui long, une répétition de l'actionnement de touches, une fonction qui est obtenue par un appui sur deux ou plusieurs touches, le pilotage d'un avertisseur sonore ou visuel par appui sur une touche de validation, etc..

Ce dispositif permet de limiter le nombre de contacts tournants à frottement utilisés tout en autorisant une transmission importante d'informations.

Grâce à l'universalité des composants utilisés dans le volant, on peut envisager un très grand nombre de solutions au niveau de l'interface homme/machine.

La compatibilité avec les protocoles de transmission permet le cas échéant, de garantir une bonne fiabilité de transmission vis à vis des perturbations extérieures tout en permettant une interface simple avec des composants déjà disponibles sur le marché.

Il va de soi bien entendu que des moyens de raccordement comportant des organes de raccordement autres que des contacts tournants à frottement peuvent être utilisés.

## Revendications

1. Dispositif de raccordement électrique de premiers composants (1) intégrés dans un volant de direction (2) notamment de véhicule automobile, et de seconds composants (3) intégrés dans le reste de la structure de celui-ci (4), du type comportant des moyens (7,8) de raccordement des composants, adaptés pour transmettre un signal d'alimentation des premiers composants à partir des seconds et des signaux d'informations à partir des premiers composants vers les seconds, caractérisé en ce que les premiers composants comprennent des moyens (15,17,18) de modulation de l'amplitude du courant d'alimentation circulant entre les seconds et les premiers composants, pour transmettre lesdits signaux d'informations en direction des seconds composants et en ce que les seconds composants comportent des moyens (22,24,25;23,26) de reconnaissance dans le signal d'alimentation, desdits signaux d'informations.

2. Dispositif de raccordement électrique selon la revendication 1, caractérisé en ce que les moyens de raccordement comportent deux organes de raccordement (7,8), dont l'un (7) est raccordé à la borne positive de l'alimentation du véhicule et l'autre (8) est raccordé à la masse.

3. Dispositif de raccordement électrique selon la revendication 2, caractérisé en ce que les moyens de modulation comprennent un transistor (17) relié entre l'organe de raccordement (7) raccordé à la borne positive d'alimentation et la masse, à travers une résistance (18), et dont la base est pilotée par la sortie de moyens (15) de génération des signaux d'informations.

4. Dispositif de raccordement électrique selon la revendication 3, caractérisé en ce que les moyens de génération des signaux d'informations comprennent un micro-contrôleur (15) de scrutation de moyens de commande (16) d'organes fonctionnels du véhicule, pour engendrer un message d'informations binaires.

5. Dispositif de raccordement électrique selon l'une quelconque des revendications précédentes, caractérisé en ce que les seconds composants comprennent des moyens d'analyse du signal d'alimentation pour en extraire les signaux d'informations.

6. Dispositif de raccordement électrique selon la revendication 5, caractérisé en ce que les moyens d'analyse comprennent des moyens (22 ;23) de suppression de la composante continue du signal d'alimentation pour en extraire les signaux d'informations et des moyens(24,25;26) de mise en forme des signaux d'informations.

7. Dispositif de raccordement électrique selon la revendication 6, caractérisé en ce que les moyens de suppression de la composante continue comprennent un condensateur (22;23).

8. Dispositif de raccordement électrique selon la revendication 7, caractérisé en ce que les moyens de mise en forme comportent un amplificateur (24) associé à un inverseur (25).

9. Dispositif de raccordement électrique selon la revendication 7, caractérisé en ce que les moyens de mise en forme comprennent un comparateur de tension (26).

10. Dispositif selon l'une quelconque des revendications précédentes, caractérisé en ce que les organes de raccordement sont formés par des contacts tournants à frottement.

## Claims

1. Electric connecting arrangement of first elements (1) incorporated in a steering wheel (2), in particular of an automotive vehicle, and second elements (3) incorporated in the remainder (4) of the structure of it, of the type comprising means (7, 8) for connecting the elements adapted to transmit a supply signal for the first elements starting from the second and information signals starting from the first elements towards the second, characterised in that the first elements comprise means (15, 17, 18) for modulating the amplitude of the supply current circulating between the second and first elements, for transmitting the said information signals in the direction of the second elements and in that the second elements comprise means (22, 24, 25; 23, 26) for recognising the said information signals in the supply signal.

2. Electric connecting arrangement according to claim 1, characterised in that the connecting means comprise two connecting members (7, 8) of which the one (7) is connected to the positive supply terminal of the vehicle and the other (8) is connected to ground.

3. Electric connecting arrangement according to claim 2, characterised in that the modulating means comprise a transistor (17) connected between the connecting member (7) connected to the positive supply terminal and ground across a resistor (18) and of which the base is controlled by the output of means (25) for generating the information signals.

4. Electric connecting arrangement according to claim 3, characterised in that the means for generating the information signals comprise a micro-controller (15) for monitoring control means (16) of functional members of the vehicle for generating a binary information message.

5. Electric connecting arrangement according to any one of the foregoing claims, characterised in that the second elements comprise means for analysing the supply signal for extracting the information signals from it.

6. Electric connecting arrangement according to claim 5, characterised in that the analysing means comprise means (22; 23) for suppressing the dc component of the supply signal for extracting the information signals and means (24; 26) for shaping the information signals.

7. Electric connecting arrangement according to claim 6, characterised in that the means for suppressing the dc component comprise a capacitor (22; 23).

8. Electric connecting arrangement according to claim 7, characterised in that the shaping means comprise an amplifier (24) associated with an inverter (25).

9. Electric connecting arrangement according to claim 7, characterised in that the shaping means comprise a voltage comparator (26).

10. Arrangement according to any one of the foregoing claims, characterised in that the connecting members are formed by rotary rubbing contacts.

## Patentansprüche

1. Vorrichtung für den elektrischen Anschluß von ersten Bauteilen (1), die in ein Lenkrad (2), insbesondere eines Kraftfahrzeugs, integriert sind, und von zweiten Bauteilen (3), die in die übrige Struktur desselben (4) integriert sind, bestehend aus Mitteln (7, 8) für den Anschluß der Bauteile, die derart ausgeführt sind, daß sie ein Versorgungssignal der ersten Bauteile ausgehend von den zweiten und Informationssignale ausgehend von den ersten Bauteilen zu den zweiten übertragen, dadurch gekennzeichnet, daß die ersten Bauteile Mittel (15, 17, 18) zur Modulation der Amplitude des Versorgungsstroms, der zwischen den zweiten und den ersten Bauteilen zirkuliert, umfassen, um diese Informationssignale in die Richtung der zweiten Bauteile zu übertragen, und daß die zweiten Bauteile Mittel (22, 24, 25; 23, 26) zum Erkennen der Informationssignale in dem Versorgungssignal umfassen.

2. Elektrische Anschlußvorrichtung nach Anspruch 1, dadurch gekennzeichnet, daß die Anschlußmittel zwei Anschlußelemente (7, 8) umfassen, von denen das eine (7) an die positive Klemme der Fahrzeugversorgung und das andere (8) an die Masse angeschlossen ist.

3. Elektrische Anschlußvorrichtung nach Anspruch 2, dadurch gekennzeichnet, daß die Modulationsmittel einen Transistor (17) umfassen, der zwischen dem Anschlußelement (7), das an die positive Klemme der Versorgung und die Masse angeschlossen ist, über einen Widerstand (18) angeschlossen ist und dessen Basis von dem Ausgang von Mitteln (15) zur Erzeugung der Informationssignale gesteuert wird.

4. Elektrische Anschlußvorrichtung nach Anspruch 3, dadurch gekennzeichnet, daß die Mittel zur Erzeugung der Informationssignale einen Mikrokontroller (15) zur Prüfung von Mitteln (16) zur Steuerung von Funktionselementen des Fahrzeugs umfassen, um eine Binärinformationsmeldung zu erzeugen.

5. Elektrische Anschlußvorrichtung nach einem der vorhergehenden Ansprüche, dadurch gekennzeichnet, daß die zweiten Bauteile Mittel zur Analyse des Versorgungssignals umfassen, um daraus die Informationssignale abzuleiten.

6. Elektrische Anschlußvorrichtung nach Anspruch 5, dadurch gekennzeichnet, daß die Analysemittel Mittel (22; 23) zur Unterdrückung der kontinuierlichen Komponente des Versorgungssignals, um daraus die Informationssignale abzuleiten, und Mittel (24; 25; 26) zur Aufbereitung der Informationssignale umfassen.

7. Elektrische Anschlußvorrichtung nach Anspruch 6, dadurch gekennzeichnet, daß die Mittel zur Unterdrückung, der kontinuierlichen Komponente einen Kondensator (22; 23) umfassen.

8. Elektrische Anschlußvorrichtung nach Anspruch 7, dadurch gekennzeichnet, daß die Mittel zur Aufbereitung einen Verstärker (24) umfassen, dar an einen Umschalter (25) angeschlossen ist.

9. Elektrische Anschlußvorrichtung nach Anspruch 7, dadurch gekennzeichnet, daß die Mittel zur Aufbereitung einen Spannungsvergleicher (26) umfassen.

10. Vorrichtung nach einem der vorhergehenden Ansprüche, dadurch gekennzeichnet, daß die Anschlußelemente von Drehschleifkontakten gebildet werden.
